# EUROPÄISCHE PATENTSCHRIFT

(11) **EP 2 741 944 B1**
(45) Veröffentlichungstag und Bekanntmachung des Hinweises auf die Patenterteilung: **04.10.2017**
(21) Anmeldenummer: 12748007.7
(22) Anmeldetag: 08.08.2012
(51) Int. Cl.: B60T 8/17, B60T 8/172

(54) **BREMSSTEUERUNG FÜR EIN FAHRZEUG**
BRAKE CONTROLLER FOR A VEHICLE
COMMANDE DE FREINAGE POUR UN VÉHICULE

(30) Priorität: 10.08.2011 DE 102011052545
(43) Veröffentlichungstag der Anmeldung: 18.06.2014
(73) Patentinhaber: Bombardier Transportation GmbH, 10785 Berlin (DE)
(72) Erfinder: FRESE, Daniel, 10439 Berlin (DE); BREMM, Michael, 10627 Berlin (DE); NISCHWITZ, Georg, 12357 Berlin (DE); JOHNSON, Chris, S-72233 Västeras (SE)
(74) Vertreter: Cohausz & Florack
(86) Internationale Anmeldenummer: PCT/EP2012/065535
(87) Internationale Veröffentlichungsnummer: WO 2013/021012

(56) Entgegenhaltungen:
- EP-A2- 1 902 918
- WO-A1-2007/031567
- DE-A1- 10 230 866

## Beschreibung

Die vorliegende Erfindung betrifft ein Verfahren zur Ansteuerung einer Bremseinrichtung eines Fahrzeugs, insbesondere eines Schienenfahrzeugs für den Hochgeschwindigkeitsverkehr, bei dem in einem Ermittlungsschritt wenigstens ein für eine aktuelle Ist-Verzögerung des Fahrzeugs entlang einer Fahrzeuglängsrichtung repräsentatives, von einem Betriebszustand der Bremseinrichtung des Fahrzeugs unabhängiges Ist-Verzögerungssignal ermittelt wird, in einem Vergleichsschritt das Ist-Verzögerungssignal mit einem vorgebbaren Soll-Verzögerungssignal verglichen wird, wobei das Soll-Verzögerungssignal für eine aktuell vorgegebene Soll-Verzögerung des Fahrzeugs repräsentativ ist, und in einem Betätigungsschritt in Abhängigkeit von dem Ergebnis des Vergleichsschritts wenigstens eine Bremseinheit der Bremseinrichtung zur Unterstützung einer Bremswirkung der Bremseinrichtung angesteuert wird. Die Erfindung betrifft weiterhin eine Vorrichtung und ein Fahrzeug, bei der bzw. dem ein solches Verfahren implementiert ist.

Bei Fahrzeugen, insbesondere modernen Schienenfahrzeugen, die mit vergleichsweise hohen Nennbetriebsgeschwindigkeiten betrieben werden, besteht unter Sicherheitsgesichtspunkten ein erheblicher Bedarf, das Fahrzeug in kritischen Situationen (beispielsweise im Fall einer drohenden Kollision, eines drohenden Entgleisens etc.) in einer Schnellbremsung (so genanntes "Emergency Braking") möglichst schnell zum Stillstand zu bringen.

Angesichts der Sicherheitsrelevanz der Funktion "Bremsen" in derartigen kritischen Situationen (nicht zuletzt wegen der potentiellen Gefährdung der Passagiere des Fahrzeugs) muss für die Bremseinrichtung nach gängigen Normen ein gewisser Sicherheitslevel nachgewiesen werden. Hierbei wird beispielsweise in der Norm EN 61508 (die aus der internationalen Norm IEC 61508 entstanden ist) ein so genannter Sicherheitsintegritätslevel (SIL) mit vier Stufen definiert, wobei der Sicherheitsintegritätslevel 4 (SIL4) die höchste Stufe der Sicherheitsintegrität (mit den höchsten Sicherheitsanforderungen) und der Sicherheitsintegritätslevel 1 (SIL1) die niedrigste Stufe darstellt. Für moderne Schienenfahrzeuge ist für die Betriebssituation der Schnellbremsung in der Regel ein Sicherheitsintegritätslevel von mindestens SIL3 vorgeschrieben.

In modernen Schienenfahrzeugen steht in der Regel eine Bremseinrichtung zur Verfügung, welche über mehrere unterschiedliche Bremseinheiten verfügt. So ist bei über Elektromotoren angetriebenen Fahrzeugen in der Regel eine elektrodynamische Bremseinheit und eine oder mehrere mechanisch wirkende Reibbremseinheiten (z. B. pneumatische Bremse, Federspeicherbremse, Magnetschienenbremse etc.) vorgesehen.

Während die elektrodynamische Bremseinheit weitestgehend verschleißarm arbeitet, sind die mechanisch wirkenden Reibbremseinheiten naturgemäß mit einem erheblichen Verschleiß der Reibpartner verbunden, weshalb in der Regel versucht wird, den Einsatz der Reibbremseinheiten auf das Notwendigste zu reduzieren.

So wird beispielsweise bereits in der DE 66 08 396 U vorgeschlagen, die aktuelle Ist-Bremswirkung einer elektrodynamischen Bremseinheit anhand von Signalen der Bremseinheit zu erfassen, diese mit einer aktuell vorgegebenen Soll-Bremswirkung zu vergleichen und abhängig von dem Ergebnis des Vergleichs eine Reibbremse nur zu aktivieren, wenn die Ist-Bremswirkung der elektrodynamischen Bremseinheit hinter der Soll-Bremswirkung zurückbleibt. Problematisch ist hierbei, dass die Erfassung der Ist-Bremswirkung anhand von internen Signalen aus der Bremseinheit selbst erfolgt, sodass erheblicher Aufwand betrieben werden müsste, um mit dieser internen Erfassung einen gewünschten hohen Sicherheitsintegritätslevel (z. B. mindestens SIL3) zu erreichen.

Um diesem Problem abzuhelfen, wird beispielsweise in der DE 195 10 755 C2 ein gattungsgemäßes Verfahren vorgeschlagen, bei dem eine aktuelle Ist-Verzögerung des Fahrzeugs unabhängig von der Bremseinrichtung mittels eines Beschleunigungssensors erfasst wird, diese Ist-Verzögerung mit einer aktuell vorgegebenen Soll-Verzögerung verglichen wird und für den Fall, dass die Ist-Verzögerung hinter der Soll-Verzögerung zurückbleibt, möglichst alle Reibbremseinrichtungen des Fahrzeugs über separate Signalwege angesteuert werden. Problematisch ist hierbei zum einen, dass sämtliche Reibbremsen des Fahrzeugs in einem solchen Fall stark beansprucht werden. Zudem erfordert dieser Ansatz mehrere unabhängige Reibbremssysteme, wodurch sich der Aufwand für das Fahrzeug erhöht. Ein ähnliches Verfahren ist auch aus der EP 1 902 918 A2 sowie der DE 100 04 430 A1 bekannt.

Der vorliegenden Erfindung liegt daher die Aufgabe zu Grunde, ein Verfahren, eine Vorrichtung sowie Fahrzeug der eingangs genannten Art zur Verfügung zu stellen, welche die oben genannten Nachteile nicht oder zumindest in geringerem Maße mit sich bringen und insbesondere auf einfache Weise eine zuverlässige Schnellbremsung bei hohem Sicherheitsintegritätslevel ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin durch eine Vorrichtung gemäß dem Oberbegriff des Anspruchs 8 durch die im kennzeichnenden Teil des Anspruchs 8 angegebenen Merkmale.

Der vorliegenden Erfindung liegt die technische Lehre zu Grunde, dass man auf einfache Weise eine zuverlässige Schnellbremsung bei hohem Sicherheitsintegritätslevel realisieren kann, wenn bereits bei der Erfassung der Ist-Verzögerung die Voraussetzungen für die einfache Erzielung eines hohen Sicherheitsintegritätslevels geschaffen werden, indem mehrere vorzugsweise voneinander unabhängige Informationen verwendet werden, welche Rückschlüsse auf die Ist-Verzögerung zulassen.

Hierbei ist es von Vorteil, dass entsprechende Signale bzw. Informationen, die für den aktuellen Fahrzustand des Fahrzeugs und damit auch dessen aktuelle Ist-Verzögerung repräsentativ sind, in der Regel auf vielen Fahrzeugen ohnehin aus unterschiedlichen Quellen vorhandenen sind, sodass hierfür vorteilhafter Weise kein zusätzlicher Aufwand betrieben werden muss. Zu diesen ohnehin vorhandenen Informationen bzw. Signalen zählen insbesondere unter anderem die aktuelle bzw. momentane Geschwindigkeit des Fahrzeugs, wie sie beispielsweise aus einem Zugleitsystem oder einem Navigationsmodul (z. B. GPS) verfügbar ist, sowie die aktuellen bzw. momentanen Drehzahlen der Radeinheiten (z. B. Radsätze, Radpaare oder aber auch Einzelräder). Aus dem zeitlichen Verlauf der Geschwindigkeit bzw. der genannten Drehzahlen lässt sich die aktuelle Ist-Verzögerung in einfacher Weise ermitteln und für den Vergleich nutzen.

Die über die von dem eigentlichen Bremssystem unabhängigen, unterschiedlichen Informationen bzw. Teilsignale erzielte Redundanz erhöht die Ausfallsicherheit des Systems und erleichtert somit den Aufwand für den Nachweis eines hohen Sicherheitsintegritätslevels erheblich.

Gemäß einem Aspekt betrifft die Erfindung daher ein Verfahren zur Ansteuerung einer Bremseinrichtung eines Fahrzeugs, insbesondere eines Schienenfahrzeugs für den Hochgeschwindigkeitsverkehr, bei dem in einem Ermittlungsschritt wenigstens ein für eine aktuelle Ist-Verzögerung des Fahrzeugs entlang einer Fahrzeuglängsrichtung repräsentatives, von einem Betriebszustand der Bremseinrichtung des Fahrzeugs unabhängiges Ist-Verzögerungssignal ermittelt wird, in einem Vergleichsschritt das Ist-Verzögerungssignal mit einem vorgebbaren Soll-Verzögerungssignal verglichen wird, wobei das Soll-Verzögerungssignal für eine aktuell vorgegebene Soll-Verzögerung des Fahrzeugs repräsentativ ist, und in einem Betätigungsschritt in Abhängigkeit von dem Ergebnis des Vergleichsschritts wenigstens eine Bremseinheit der Bremseinrichtung zur Unterstützung einer Bremswirkung der Bremseinrichtung angesteuert wird. Das Ist-Verzögerungssignal wird in dem Ermittlungsschritt unter Verwendung einer Mehrzahl voneinander unabhängiger Teilsignale ermittelt, wobei jedes Teilsignal für die aktuelle Ist-Verzögerung des Fahrzeugs entlang der Fahrzeuglängsrichtung repräsentativ ist.

Wie bereits erwähnt, sind die verwendeten Teilsignale bevorzugt voneinander unabhängig. Dies kann auf beliebige geeignete Weise realisiert sein. Vorzugsweise stammen wenigstens zwei der Teilsignale aus unterschiedlichen Quellen. Hierzu können unterschiedliche Quellen desselben Typs bzw. derselben Art, also beispielsweise zwei oder mehrere am Fahrzeug platzierte Sensoren desselben Typs, verwendet werden, aus denen die entsprechenden Teilsignale bzw. Informationen stammen. Vorzugsweise sind auch die unterschiedlichen Quellen unterschiedlicher Art, um in vorteilhafter Weise die Tragweite von Fehlern zu reduzieren, die aus Einflüssen resultieren, welche sich auf einen bestimmten Quellentyp auswirken.

Es versteht sich, dass als Teilsignal grundsätzlich jegliches Signal verwendet werden kann, welches einen Rückschluss auf die aktuelle Ist-Verzögerung des Fahrzeugs zulässt. Besonders einfach lässt sich die aktuelle Ist-Verzögerung (als einfache zeitliche Ableitung) aus dem Verlauf der Geschwindigkeit des Fahrzeugs ableiten. Vorzugsweise wird daher als eines der Teilsignale ein Signal verwendet, welches aus einem für eine aktuelle Geschwindigkeit des Fahrzeugs repräsentativen Geschwindigkeitssignal abgeleitet ist. Hierzu können beliebige geeignete Signale bzw. Quellen verwendet werden.

So kann das Geschwindigkeitssignal aus einer, insbesondere satellitengestützten, Navigationseinheit des Fahrzeugs stammen. Zusätzlich oder alternativ kann das Geschwindigkeitssignal aus einem Fahrzeugleitsystem des Fahrzeugs stammen.

Zusätzlich oder alternativ kann das Geschwindigkeitssignal schließlich aus wenigstens einem Drehzahlsignal abgeleitet sein, das für die Drehzahl wenigstens einer Antriebskomponente des Fahrzeugs, insbesondere einer Radeinheit und/oder einer Motoreinheit des Fahrzeugs, repräsentativ ist, da wegen der (meist ausreichend genau) bekannten Beziehung zwischen der Drehzahl der Räder und der Fahrgeschwindigkeit des Fahrzeugs geschlossen werden kann.

Bei weiteren Varianten der Erfindung kann als eines der Teilsignale ein Signal verwendet wird, welches aus einem Beschleunigungssensor des Fahrzeugs stammt, da hieraus unmittelbar auf die aktuelle Ist-Verzögerung geschlossen werden kann

Es können grundsätzlich sämtliche verfügbaren Teilsignale für die Ermittlung des Ist-Verzögerungssignals verwendet werden. Um den Einfluss von Fehlern möglichst gering zu halten, erfolgt bevorzugt bei der Ermittlung des Ist-Verzögerungssignals eine Plausibilitätsprüfung wenigstens eines der Teilsignale, wobei das wenigstens eine Teilsignal dann in Abhängigkeit von einem Ergebnis der Plausibilitätsprüfung für die Ermittlung des Ist-Verzögerungssignals verwendet wird. Hierdurch können unplausible bzw. fehlerhafte Teilsignale aus der Ermittlung des Ist-Verzögerungssignals ausgeschlossen werden.

Die Plausibilitätsprüfung kann auf beliebige geeignete Weise erfolgen. So können beispielsweise fest vorgegebene Ausschlussbereiche bzw. Ausschlusskriterien (zu hohe Verzögerung oder zu starke Variation der Verzögerung) definiert sein. Liegt das überprüfte Teilsignal in einem solchen Ausschlussbereich, dann kann es von vorneherein ausgeschlossen werden. Vorzugsweise erfolgt die Plausibilitätsprüfung unter Verwendung wenigstens eines zweiten Teilsignals, vorzugsweise mehrerer Teilsignale, welches bzw. welche als Referenz verwendet werden.

Das Ist-Verzögerungssignal kann aus den verwendbaren Teilsignalen auf beliebige geeignete Weise ermittelt werden. Es kann beispielsweise einfach eines der Teilsignale, welches als repräsentativ eingestuft wird, als das Ist-Verzögerungssignal verwendet werden. Vorzugsweise wird zur Ermittlung des Ist-Verzögerungssignals beispielsweise ein Mittelwert der verwendeten Teilsignale genutzt.

Bei bevorzugten Varianten des erfindungsgemäßen Verfahrens wird in dem Betätigungsschritt in einem ersten Betriebsmodus wenigstens eine erste Bremseinheit der Bremseinrichtung betätigt, wenn in dem Vergleichsschritt festgestellt wird, dass die aktuelle Ist-Verzögerung die aktuelle Soll-Verzögerung erreicht oder übersteigt. Hingegen wird in dem Betätigungsschritt in einem zweiten Betriebsmodus wenigstens eine zweite Bremseinheit der Bremseinrichtung betätigt, wenn in dem Vergleichsschritt festgestellt wird, dass die aktuelle Ist-Verzögerung die aktuelle Soll-Verzögerung unterschreitet. Hierdurch können je nach Betriebssituation unterschiedliche Bremseinheiten verwendet werden, wodurch insbesondere eine verschleißoptimierte Nutzung der Bremseinheiten möglich ist.

Dabei kann vorgesehen sein, dass in dem ersten Betriebsmodus die zweite Bremseinheit, insbesondere in Abhängigkeit von der aktuellen Soll-Verzögerung, ergänzend betätigt wird, um eine bestimmte Bremswirkung zu erzielen.

Weiterhin kann vorgesehen sein, dass in dem zweiten Betriebsmodus die erste Bremseinheit deaktiviert wird. Dies kann insofern sinnvoll sein, als beispielsweise sofort auf eine als besonders zuverlässig eingestufte Bremseinheit umgestiegen wird, welche dann gegebenenfalls mit voller Bremsleistung betrieben wird, um mit hoher Sicherheit eine möglichst schnelle Bremsung zu erzielen.

Die Ansteuerung der verwendeten Bremseinheiten kann grundsätzlich zumindest abschnittsweise über denselben Signalpfad erfolgen. Um die Ausfallsicherheit zu erhöhen werden bevorzugt getrennte Signalpfade verwendet. Vorzugsweise werden daher in dem ersten Betriebsmodus die erste Bremseinheit und/oder die zweite Bremseinheit über einen ersten Signalpfad angesteuert, während in dem zweiten Betriebsmodus die zweite Bremseinheit über einen zweiten Signalpfad angesteuert wird, der von dem ersten Signalpfad verschieden ist.

Bei bevorzugten Varianten der Erfindung ist der erste Betriebsmodus ein, insbesondere durch ein Schnellbremssignal ausgelöster, Schnellbremsmodus ist, während der zweite Betriebsmodus ein Notbremsmodus (so genanntes "Urgency Braking") ist. Weiterhin ist ein Betriebsbremsmodus vorgesehen, in dem bei Fehlen eines Schnellbremssignals keine Durchführung des Vergleichsschritts erfolgt. Hiermit kann eine normale Betriebsbremsung (so genanntes "Service Braking") durchgeführt werden (wie es im normalen Betrieb ohne Notsituation beispielsweise beim Einfahren in bestimmte, mit verringerter Geschwindigkeit zu befahrende Streckenabschnitte oder Bahnhöfe etc. erforderlich ist), ohne dass die Überwachung der aktuellen Bremswirkung mit ihren oben beschriebenen Konsequenzen erfolgt. Die beschriebene Überwachung der aktuellen Bremswirkung und deren Konsequenzen kommen erst dann zum Tragen, wenn der Schnellbremsmodus aktiviert wurde, beispielsweise eine entsprechende Betätigung durch den Fahrzeugführer oder eine Auslösung durch ein Zugleitsystem oder dergleichen erfolgte.

Vorzugsweise wird in dem Betriebsbremsmodus die erste Bremseinheit betätigt, die dann bevorzugt von einer möglichst verschleißarmen Bremseinheit gebildet wird. Dabei kann, insbesondere in Abhängigkeit von der aktuellen Soll-Verzögerung, gegebenenfalls ergänzend die zweite Bremseinheit (beispielsweise eine Reibbremse) betätigt werden.

Vorzugsweise ist vorgesehen, dass als eine erste Bremseinheit eine verschleißarme elektrodynamische Bremseinheit verwendet wird, während zusätzlich oder alternativ als eine zweite Bremseinheit eine mechanische Bremseinheit, insbesondere eine pneumatische Bremseinheit, verwendet wird, die sich typischerweise durch ihre besonders hohe Zuverlässigkeit auszeichnet.

Die vorliegende Erfindung betrifft weiterhin eine Vorrichtung zur Ansteuerung einer Bremseinrichtung eines Fahrzeugs, insbesondere eines Schienenfahrzeugs für den Hochgeschwindigkeitsverkehr, mit einer Steuereinrichtung, wobei die Steuereinrichtung dazu ausgebildet ist, in einem Ermittlungsschritt wenigstens ein für eine aktuelle Ist-Verzögerung des Fahrzeugs entlang einer Fahrzeuglängsrichtung repräsentatives, von einem Betriebszustand der Bremseinrichtung des Fahrzeugs unabhängiges Ist-Verzögerungssignal zu ermitteln. Weiterhin ist die Steuereinrichtung dazu ausgebildet, in einem Vergleichsschritt das Ist-Verzögerungssignal mit einem vorgebbaren Soll-Verzögerungssignal zu vergleichen, wobei das Soll-Verzögerungssignal für eine aktuell vorgegebene Soll-Verzögerung des Fahrzeugs repräsentativ ist. Zudem ist die Steuereinrichtung dazu ausgebildet, in einem Betätigungsschritt in Abhängigkeit von dem Ergebnis des Vergleichsschritts wenigstens eine Bremseinheit der Bremseinrichtung zur Unterstützung einer Bremswirkung der Bremseinrichtung anzusteuern. Schließlich ist die Steuereinrichtung dazu ausgebildet, das Ist-Verzögerungssignal in dem Ermittlungsschritt unter Verwendung einer Mehrzahl voneinander unabhängiger Teilsignale ermittelt wird, wobei jedes Teilsignal für die aktuelle Ist-Verzögerung des Fahrzeugs entlang der Fahrzeuglängsrichtung repräsentativ ist.

Hiermit lassen sich die oben im Zusammenhang mit den erfindungsgemäßen Verfahren beschriebenen Varianten und Vorteile in demselben Maße realisieren, sodass insoweit auf die obigen Ausführungen Bezug genommen wird.

Die vorliegende Erfindung betrifft weiterhin ein Fahrzeug, insbesondere ein Schienenfahrzeug für den Hochgeschwindigkeitsverkehr mit einer Nennbetriebsgeschwindigkeit oberhalb von 250 km/h, insbesondere oberhalb von 350 km/h, welches eine erfindungsgemäße Vorrichtung zur Ansteuerung einer Bremseinrichtung des Fahrzeugs umfasst.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: eine schematische Ansicht eines Teils einer bevorzugten Ausführungsform des erfindungsgemäßen Schienenfahrzeugs mit einer bevorzugten Ausführungsform der erfindungsgemäßen Vorrichtung zur Ansteuerung einer Bremseinrichtung eines Fahrzeugs, mit der eine bevorzugte Ausführungsform des erfindungsgemäßen Verfahrens zur Ansteuerung einer Bremseinrichtung ausgeführt werden kann;
- Figur 2: ein Ablaufdiagramm des Verfahrens zur Ansteuerung einer Bremseinrichtung, das in dem Fahrzeug aus Figur 1 implementiert ist.

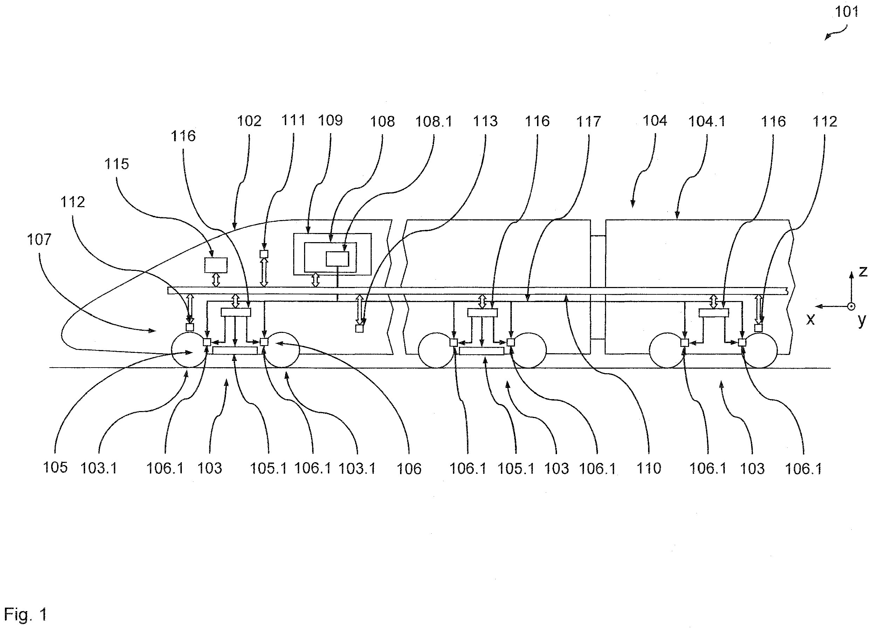

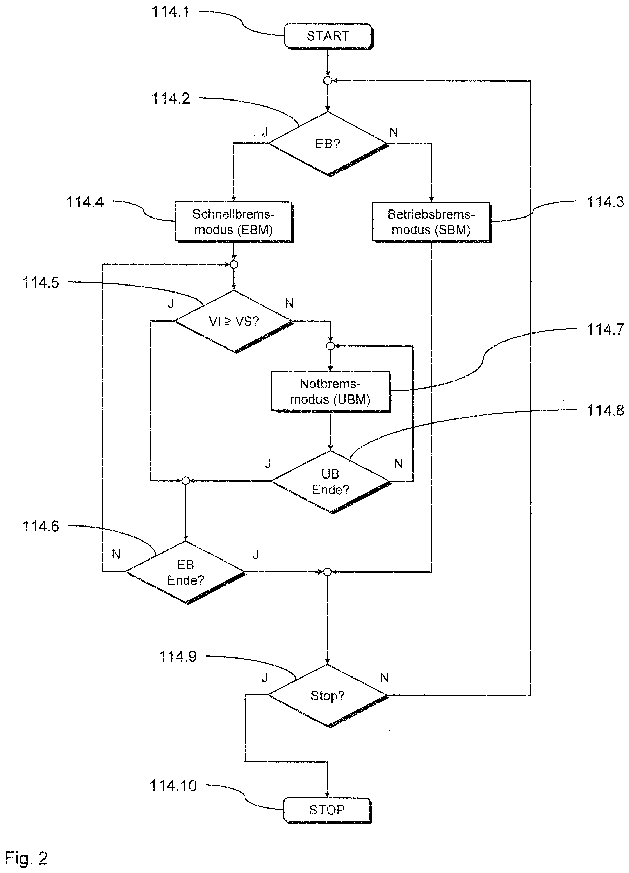

Im Folgenden wird unter Bezugnahme auf die Figur 1 und 2 ein bevorzugtes Ausführungsbeispiel des erfindungsgemäßen Schienenfahrzeugs 101 beschrieben. Bei dem Schienenfahrzeug 101 handelt es sich um einen Triebzug für den Hochgeschwindigkeitsverkehr, dessen Nennbetriebsgeschwindigkeit oberhalb von 250 km/h, nämlich bei Vₙ = 300 km/h bis 380 km/h, liegt.

Das Fahrzeug 101 umfasst einen Endwagen 102 mit einem Wagenkasten 102.1, der im Bereich seiner beiden Enden in herkömmlicher Weise jeweils auf einem Fahrwerk in Form eines Drehgestells 103 abgestützt ist. Es versteht sich jedoch, dass die vorliegende Erfindung auch in Verbindung mit anderen Konfigurationen eingesetzt werden kann, bei denen der Wagenkasten lediglich auf einem Fahrwerk abgestützt ist. An den Endwagen schließen sich weitere Mittelwagen 104, deren Wagenkästen 104.1 ebenfalls jeweils auf Drehgestellen 103 abgestützt sind.

Zum einfacheren Verständnis der nachfolgenden Erläuterungen ist in der Figur 1 ein (durch die Radaufstandsebene des Drehgestells 103 vorgegebenes) Fahrzeug-Koordinatensystem x,y,z angegeben, in dem die x-Koordinate die Längsrichtung, die y-Koordinate die Querrichtung und die z-Koordinate die Höhenrichtung des Schienenfahrzeugs 101 bezeichnen.

Das Drehgestell 103 weist in herkömmlicher Weise zwei Radeinheiten in Form von Radsätzen 103.1 auf, die jeweils zwei Räder 103.2 umfassen. Bei den Drehgestellen 103 handelt es sich teils um angetriebene Triebdrehgestelle und teils um nicht angetriebene Laufdrehgestelle. Die Radsätze 103.1 von Triebdrehgestellen werden über eine Antriebseinrichtung 105.1 angetrieben, die im Fall einer Bremsung auch generatorisch betrieben werden kann und somit einen Teil einer elektrodynamischen Bremseinheit 105 bildet. Weiterhin können die Radsätze 103.1 aller Drehgestelle über Reibbremselemente 106.1 einer pneumatischen Reibbremseinheit 106 gebremst werden. Die elektrodynamischen Bremseinheit 105 und die Reibbremseinheit 106 sind Komponenten einer Bremseinrichtung 107, die gegebenenfalls noch weitere Komponenten umfassen kann.

Das Fahrzeug 101 weist in dem Endwagen 102 eine Steuereinheit in Form einer Bremssteuerung 108 auf, die Teil einer zentralen Fahrzeugsteuerung 109 ist und im vorliegenden Beispiel mit entfernten Komponenten unter anderem über eine sich durch das gesamte Fahrzeug 101 erstreckende Kommunikationsverbindung in Form eines Fahrzeugbusses 110 verbunden ist. Es versteht sich hierbei, dass bei anderen Varianten der Erfindung auch eine andere Kommunikationsverbindung gewählt sein kann. Insbesondere kann (unter anderem je nach den Vorgaben bestimmter Sicherheitsrichtlinien oder dergleichen) zusätzlich oder alternativ eine feste Verdrahtung mit den entfernten Komponenten vorgesehen sein.

Die Bremssteuerung 108 ist mit einer Reihe von unterschiedlichen Quellen für Quellensignale QSi verbunden, aus denen die Bremssteuerung 108 für eine aktuelle Verzögerung repräsentative Teilsignale TSi ableitet. Aus den Teilsignalen TSi ermittelt die Bremssteuerung 108 wiederum ein Ist-Verzögerungssignal VSI, das für eine aktuelle Ist-Verzögerung VI des Fahrzeugs 101 entlang der Fahrzeuglängsrichtung (x-Richtung) repräsentativ ist.

So ist die Bremssteuerung 108 zum einen mit einem satellitengestützten Navigationssystem 111 (beispielsweise einem GPS-Modul oder dergleichen) des Fahrzeugs 101 verbunden, welches als erste Quelle ein erstes Quellensignal QS1 in Form eines ersten Geschwindigkeitssignals liefert, das für die aktuelle Fahrgeschwindigkeit v des Fahrzeugs 101 repräsentativ ist. Aus diesem ersten Quellensignal QS1 ermittelt die Bremssteuerung 108 als erstes Teilsignal TS1 eine erste Verzögerung V1, indem sie eine einfache zeitliche Ableitung des zeitlichen Verlaufs der ersten Geschwindigkeit v bildet.

Ein in der zentralen Fahrzeugsteuerung 109 implementiertes Fahrzeugleitsystem des Fahrzeugs 101 liefert als zweite Quelle ein zweites Quellensignal QS2 in Form eines zweiten Geschwindigkeitssignals, das ebenfalls für die aktuelle Fahrgeschwindigkeit v des Fahrzeugs 101 repräsentativ ist. Aus diesem zweiten Quellensignal QS2 ermittelt die Bremssteuerung 108 als zweites Teilsignal TS2 wiederum durch zeitliche Ableitung eine zweite Verzögerung V2.

Weiterhin liefern eine Reihe von den Radsätzen 103.1 zugeordneten Drehzahlsensoren 112 als dritte Quellen ein drittes Quellensignal QS3 in Form eines Drehzahlsignals. Aus dem Drehzahlsignal leitet die Bremssteuerung 108 dank der (ausreichend genau) bekannten Beziehung zwischen der Drehzahl der Radsätze 103.1 und der Fahrgeschwindigkeit v ein drittes Geschwindigkeitssignal ab, das ebenfalls für die aktuelle Fahrgeschwindigkeit v des Fahrzeugs 101 repräsentativ ist. Aus dem dritten Quellensignal QS3 ermittelt die Bremssteuerung 108 mithin dann als drittes Teilsignal TS3 wiederum durch zeitliche Ableitung eine dritte Verzögerung V3.

Schließlich liefert wenigstens ein Beschleunigungssensor 113 des Fahrzeugs 101 als viertes Teilsignal TS4 ein Beschleunigungssignal, das unmittelbar für eine vierte Verzögerung V3 des Fahrzeugs 101 repräsentativ ist.

Es versteht sich, dass bei anderen Varianten der Erfindung als Teilsignal grundsätzlich jegliches Signal verwendet werden kann, welches einen Rückschluss auf eine aktuelle Verzögerung des Fahrzeugs zulässt.

In der Bremssteuerung 108 ist im vorliegenden Beispiel eine bevorzugte Ausführungsform des erfindungsgemäßen Verfahrens zur Ansteuerung der Bremseinrichtung implementiert, wie es in Figur 2 dargestellt ist und nachfolgend beschrieben wird.

Das Verfahren wird dabei zunächst in einem Schritt 114,1 gestartet. In einem Schritt 114,2 wird dann überprüft, ob eine Anforderung für eine Schnellbremsung EB, beispielsweise in Form eines Schnellbremssignals, vorliegt. Diese Anforderung könnte beispielsweise durch den Fahrzeugführer über eine Bedieneinrichtung 115 im Fahrzeugführerraum ausgelöst worden sein. Ebenso könnte sie in hinlänglich bekannter Weise durch das Zugleitsystem ausgelöst worden sein.

Ist dies nicht der Fall, schaltet die Bremssteuerung 108 in einem Schritt 114.3 in einen Betriebsbremsmodus SBM. In diesem Betriebsbremsmodus SBM steuert die Bremssteuerung 108 über einen ersten Signalpfad in einem Betätigungsschritt primär die verschleißarme elektrodynamische Bremseinheit 105 an, um in Abhängigkeit von einer beispielsweise durch den Fahrzeugführer über die Bedieneinrichtung 115 vorgegebenen Soll-Verzögerung VS eine normale Betriebsbremsung mit einer Bremswirkung zu erzielen, wie sie im normalen Betrieb ohne Notsituation beispielsweise beim Einfahren in bestimmte, mit verringerter Geschwindigkeit zu befahrende Streckenabschnitte oder Bahnhöfe etc. erforderlich ist.

Dabei kann beispielsweise in Abhängigkeit von der aktuellen Soll-Verzögerung VS über den ersten Signalpfad gegebenenfalls ergänzend die zweite Reibbremseinheit 106 betätigt werden, um die Bremswirkung zu unterstützen.

Der erste Signalpfad verläuft im vorliegenden Beispiel über den Fahrzeugbus 110 und damit verbundene lokale Bremssteuergeräte 116, welche dann die Bremseinheiten 105.1 und 106.1 ansteuern.

Sobald die Bremssteuerung 108 in den Betriebsbremsmodus SB geschaltet hat, wird nach einer Überprüfung, ob der Verfahrensablauf beendet werden soll, (sofern dies nicht der Fall ist wieder zu dem Schritt 114.2 zurückgesprungen.

Wird in dem Schritt 114.2 festgestellt, dass eine Notsituation mit einer Anforderung für eine Schnellbremsung EB vorliegt, schaltet die die Bremssteuerung 108 in einem Schritt 114.4 in einen Schnellbremsmodus EBM. In diesem Schnellbremsmodus EBM steuert die Bremssteuerung 108 wiederum über den ersten Signalpfad in einem Betätigungsschritt primär die verschleißarme elektrodynamische Bremseinheit 105 an, um in Abhängigkeit von einer beispielsweise durch den Fahrzeugführer über die Bedieneinrichtung 115 vorgegebenen Soll-Verzögerung VS eine Schnellbremsung mit einer maximalen Bremswirkung zu erzielen.

Die elektrodynamische Bremseinheit 105 wird dabei entlang der Hüllkurve des Kennfelds der Antriebseinrichtungen 105.1 im generatorischen Betrieb betrieben, um die erwähnte maximale Bremswirkung zu erzielen.

Auch hier kann in Abhängigkeit von der aktuellen Soll-Verzögerung VS über den ersten Signalpfad gegebenenfalls ergänzend die Reibbremseinheit 106 betätigt werden, um die gewünschte Bremswirkung für die Schnellbremsung EB zu unterstützen.

In einem Schritt 114.5 wird dann unmittelbar nach Aktivierung des Schnellbremsmodus EBM überprüft, ob die aktuelle Ist-Verzögerung VI des Fahrzeugs 101 die aktuelle Soll-Verzögerung VS erreicht oder übersteigt.

Hierzu wird in einem Ermittlungsschritt ein für eine aktuelle Ist-Verzögerung VI des Fahrzeugs 101 entlang der Fahrzeuglängsrichtung (x-Richtung) repräsentatives Ist-Verzögerungssignal VSI ermittelt. In einem Vergleichsschritt wird dann das Ist-Verzögerungssignal VSI mit einem vorgebbaren Soll-Verzögerungssignal VSS verglichen wird. Das Soll-Verzögerungssignal VSS ist dabei für eine aktuell vorgegebene Soll-Verzögerung VS des Fahrzeugs repräsentativ.

Das Ist-Verzögerungssignal VSI wird dabei durch die Bremssteuerung 108 unter Verwendung der oben beschriebenen Teilsignale TS1 bis TS4 ermittelt. Hierbei können grundsätzlich sämtliche verfügbaren Teilsignale TS1 bis TS4 für die Ermittlung des Ist-Verzögerungssignals VSI verwendet werden. Um den Einfluss von Fehlern möglichst gering zu halten, führt die Bremssteuerung 108 bevorzugt bei der Ermittlung des Ist-Verzögerungssignals VSI eine Plausibilitätsprüfung der Teilsignale TS1 bis TS4 durch, wobei das wenigstens eine Teilsignal dann in Abhängigkeit von einem Ergebnis der Plausibilitätsprüfung für die Ermittlung des Ist-Verzögerungssignals VSI verwendet wird. Hierdurch können unplausible bzw. fehlerhafte Teilsignale TSi aus der Ermittlung des Ist-Verzögerungssignals VSI ausgeschlossen werden.

Die Plausibilitätsprüfung kann auf beliebige geeignete Weise erfolgen. So können beispielsweise fest vorgegebene Ausschlussbereiche bzw. Ausschlusskriterien (zu hohe Verzögerung oder zu starke Variation der Verzögerung) definiert sein. Liegt das überprüfte Teilsignal TSi in einem solchen Ausschlussbereich, dann kann es von vorneherein ausgeschlossen werden. Vorzugsweise erfolgt die Plausibilitätsprüfung eines Teilsignals TSi unter Verwendung der übrigen Teilsignale TSj (mit i ≠ j), welche dann beispielsweise als Referenz verwendet werden.

Das Ist-Verzögerungssignal VSI kann aus den verwendbaren Teilsignalen TSi auf beliebige geeignete Weise ermittelt werden. Es kann beispielsweise einfach eines der Teilsignale TSi, welches als repräsentativ eingestuft wird, als das Ist-Verzögerungssignal VSI verwendet werden. Ebenso kann als Ist-Verzögerungssignal VSI ein Mittelwert der verwendeten Teilsignale TSi genutzt werden.

Fällt die Prüfung in dem Schritt 114.5 positiv aus, d. h. erreicht oder übersteigt die aktuelle Ist-Verzögerung VI des Fahrzeugs 101 die aktuelle Soll-Verzögerung VS, so wird der Schnellbremsmodus EBM zunächst beibehalten.

In einem Schritt 114.6 wird dann überprüft, ob der Schnellbremsmodus EBM beendet werden soll, beispielsweise weil für eine bestimmte Zeit ein Stillstand des Fahrzeugs 101 vorlag oder der Schnellbremsmodus EBM auf andere Weise aufgehoben wurde. Ist dies nicht der Fall (soll der Schnellbremsmodus EBM also zunächst beibehalten werden) wird zurück zu dem Schritt 114.5 gesprungen.

Fällt die Prüfung in dem Schritt 114.5 negativ aus, d. h. bleibt die aktuelle Ist-Verzögerung VI des Fahrzeugs 101 hinter der aktuellen Soll-Verzögerung VS zurück, so schaltet die die Bremssteuerung 108 in einem Schritt 114.7 in einen Notbremsmodus UBM. In diesem Notbremsmodus UBM steuert die Bremssteuerung 108 in einem Betätigungsschritt über einen (vom ersten Signalpfad verschiedenen) zweiten Signalpfad 117 direkt die Reibbremseinheit 106 an, während im vorliegenden Beispiel die elektrodynamische Bremseinheit 105 und damit auch die Antriebseinheit deaktiviert wird. Es versteht sich jedoch, dass die elektrodynamische Bremseinheit bei anderen Varianten der Erfindung gegebenenfalls auch parallel weiter betrieben werden kann.

Die Reibbremseinheit 106 wird im Notbremsmodus UBM im vorliegenden Beispiel mit maximaler Bremsleistung betrieben, um die maximal mögliche Bremswirkung zu erzielen. Hierbei kann es zwar gegebenenfalls sein, dass die Bremswirkung der Reibbremseinheit 106 hinter der maximal möglichen Bremswirkung im Schnellbremsmodus EBM (mit elektrodynamische Bremseinheit 105 und ergänzender Reibbremseinheit 106) zurückbleibt. Die hoch zuverlässige Reibbremseinheit 106 garantiert jedoch eine ausreichend hohe Bremswirkung, sodass dieser Nachteil in Kauf genommen werden kann.

In einem Schritt 114.8 wird dann überprüft, ob der Notbremsmodus UBM beendet werden soll, beispielsweise weil für eine bestimmte Zeit ein Stillstand des Fahrzeugs 101 vorlag oder der Notbremsmodus UBM auf andere Weise aufgehoben wurde. Ist dies nicht der Fall (soll der Notbremsmodus UBM also zunächst beibehalten werden) wird zurück zu dem Schritt 114.7 gesprungen.

Andernfalls wird zum Schritt 114.6 gesprungen. Wird dort festgestellt, dass auch der Schnellbremsmodus EBM beendet werden soll, wird in einem Schritt 114.9 überprüft, ob der Verfahrensablauf beendet werden soll. Ist dies der Fall, endet der Verfahrensablauf in einem Schritt 114.10. Andernfalls wird zum Schritt 114.2 zurück gesprungen.

Die beschriebene Überwachung der aktuellen Ist-Verzögerung VI im Bezug auf die aktuelle Soll-Verzögerung VS in Schritt 114.5 unter Verwendung mehrerer voneinander und von der Bremseinrichtung 107 unabhängiger Teilsignale TSi bringen den Vorteil mit sich, dass bereits bei der Erfassung der Ist-Verzögerung VI die Voraussetzungen für die einfache Erzielung eines hohen Sicherheitsintegritätslevels der Bremssteuerung 108 geschaffen werden.

Hierbei ist es insbesondere von Vorteil, dass entsprechende Quellensignale QSi bzw. Informationen, die für den aktuellen Fahrzustand des Fahrzeugs 101 und damit auch dessen aktuelle Ist-Verzögerung VI repräsentativ sind, in der Regel auf vielen Fahrzeugen ohnehin aus unterschiedlichen Quellen vorhandenen sind, sodass hierfür vorteilhafter Weise kein zusätzlicher Aufwand betrieben werden muss.

Die Redundanz, welche über die von dem eigentlichen Bremssystem 107 unabhängigen, unterschiedlichen Informationen bzw. Teilsignale TSi aus unterschiedlichen Quellen erzielt wird, erhöht die Ausfallsicherheit des Systems und erleichtert somit den Aufwand für den Nachweis eines hohen Sicherheitsintegritätslevels der Bremssteuerung 108 erheblich. Die Verwendung von Quellen unterschiedlicher Art reduziert dabei in vorteilhafter Weise die Tragweite von Fehlern, die aus Einflüssen resultieren, welche sich auf einen bestimmten Quellentyp auswirken.

Die Steuerung, welche den Schritt 114.5 (Überwachung der aktuellen Ist-Verzögerung VI im Bezug auf die aktuelle Soll-Verzögerung VS) und 114.7 (Bremssteuerung im Notbremsmodus UBM) durchführt, ist im vorliegenden Beispiel in einer separaten Steuereinheit 108.1 der Bremssteuerung 108 realisiert. Dies hat den Vorteil, dass sie neben der räumlichen Abgrenzung auch einen eng abgegrenzten Funktionsumfang aufweist, wodurch sich der Aufwand für die Erzielung eines hohen Sicherheitsintegritätslevels erheblich reduziert und sich der Wiederverwendungsgrad bereits zertifizierter (Standard)Komponenten erhöht. Im vorliegenden Beispiel ist mit gemäßigtem Aufwand ein Sicherheitsintegritätslevel von mindestens SIL3 für den Notbremsmodus UBM ohne Weiteres realisierbar.

Für die im Betriebsbremsmodus SBM und im Schnellbremsmodus EBM verwendete Ansteuerung der elektrodynamischen Bremseinheit 105 und der Reibbremseinheit 106 muss jedoch kein entsprechender Aufwand hinsichtlich des Sicherheitsintegritätslevels betrieben werden. Die dennoch erzielte weitestgehende Nutzung der verschleißarmen elektrodynamischen Bremseinheit 105 hat den Vorteil, dass die maximale Bremsleistung der Reibbremseinheit 106 nur wenn unbedingt nötig genutzt wird. Hierdurch werden die Komponenten der Reibbremseinheit 106 (Bremsbeläge, Bremsscheiben etc.) geschont, sodass sich Verschleiß, Wartungsaufwand und damit die Lebenszykluskosten reduzieren.

Die vorliegende Erfindung wurde vorstehend ausschließlich anhand eines Beispiels beschrieben, bei dem für die Reibungsbremse eine pneumatische Bremse zum Einsatz kommt. Es versteht sich jedoch, dass die Erfindung auch im Zusammenhang mit beliebigen herkömmlichen Reibungsbremsen zum Einsatz kommen kann, wobei diese einzeln oder in beliebiger Kombination verwendet und im Notbremsmodus UBM angesteuert werden können.

Die vorliegende Erfindung wurde vorstehend ausschließlich anhand eines Triebzugs im Hochgeschwindigkeitsverkehr beschrieben. Es versteht sich jedoch, dass die Erfindung auch im Zusammenhang mit anderen Schienenfahrzeugen zum Einsatz kommen kann.

Weiterhin versteht es sich, dass die vorliegende Erfindung nicht nur für aus mehreren Wagen zusammengesetzte Fahrzeuge eingesetzt werden kann. Vielmehr kann sie natürlich auch an einem Fahrzeug, dass aus einem einzigen Wagen besteht zum Einsatz kommen.

## Patentansprüche

1. Verfahren zur Ansteuerung einer Bremseinrichtung eines Fahrzeugs, insbesondere eines Schienenfahrzeugs für den Hochgeschwindigkeitsverkehr, bei dem
- in einem Ermittlungsschritt wenigstens ein für eine aktuelle Ist-Verzögerung des Fahrzeugs (101) entlang einer Fahrzeuglängsrichtung repräsentatives, von einem Betriebszustand der Bremseinrichtung (107) des Fahrzeugs (101) unabhängiges Ist-Verzögerungssignal ermittelt wird,
- in einem Vergleichsschritt (114.5) das Ist-Verzögerungssignal mit einem vorgebbaren Soll-Verzögerungssignal verglichen wird, wobei das Soll-Verzögerungssignal für eine aktuell vorgegebene Soll-Verzögerung des Fahrzeugs (101) repräsentativ ist, und
- in einem Betätigungsschritt (114.7) in Abhängigkeit von dem Ergebnis des Vergleichsschritts wenigstens eine Bremseinheit (105, 106) der Bremseinrichtung (107) zur Unterstützung einer Bremswirkung der Bremseinrichtung (107) angesteuert wird,
**dadurch gekennzeichnet, dass**
- das Ist-Verzögerungssignal in dem Ermittlungsschritt unter Verwendung einer Mehrzahl voneinander unabhängiger Teilsignale ermittelt wird, wobei
- jedes Teilsignal für die aktuelle Ist-Verzögerung des Fahrzeugs (101) entlang der Fahrzeuglängsrichtung repräsentativ ist.

2. Verfahren nach Anspruch 1, **dadurch gekennzeichnet, dass**
- wenigstens zwei der Teilsignale aus unterschiedlichen Quellen (109, 111, 112, 113) stammen, wobei
- die unterschiedlichen Quellen (109, 111, 112, 113) insbesondere unterschiedlicher Art sind.

3. Verfahren nach Anspruch 1 oder 2, **dadurch gekennzeichnet, dass**
- als eines der Teilsignale ein Signal verwendet wird, welches aus einem für eine aktuelle Geschwindigkeit des Fahrzeugs (101) repräsentativen Geschwindigkeitssignal abgeleitet ist,
und/oder
- als eines der Teilsignale ein Signal verwendet wird, welches aus einem Beschleunigungssensor (113) des Fahrzeugs (101) stammt,
wobei
- das Geschwindigkeitssignal insbesondere aus einer, insbesondere satellitengestützten, Navigationseinheit (111) des Fahrzeugs (101) stammt, und/oder
- das Geschwindigkeitssignal insbesondere aus einem Fahrzeugleitsystem (109) des Fahrzeugs (101) stammt
und/oder
- das Geschwindigkeitssignal insbesondere aus wenigstens einem Drehzahlsignal abgeleitet ist, das für die Drehzahl wenigstens einer Antriebskomponente des Fahrzeugs (101), insbesondere einer Radeinheit (103.1) und/oder einer Motoreinheit des Fahrzeugs (101), repräsentativ ist,

4. Verfahren nach einem der Ansprüche 1 bis 3, **dadurch gekennzeichnet, dass**
- bei der Ermittlung des Ist-Verzögerungssignals eine Plausibilitätsprüfung wenigstens eines der Teilsignale erfolgt und
- das wenigstens eine Teilsignal in Abhängigkeit von einem Ergebnis der Plausibilitätsprüfung für die Ermittlung des Ist-Verzögerungssignals verwendet wird, wobei
- die Plausibilitätsprüfung insbesondere unter Verwendung wenigstens eines zweiten Teilsignals erfolgt
und/oder
- zur Ermittlung des Ist-Verzögerungssignals insbesondere ein Mittelwert der verwendeten Teilsignale verwendet wird.

5. Verfahren nach einem der Ansprüche 1 bis 4, **dadurch gekennzeichnet, dass**
- in dem Betätigungsschritt in einem ersten Betriebsmodus wenigstens eine erste Bremseinheit (105) der Bremseinrichtung (107) betätigt wird, wenn in dem Vergleichsschritt (114.5) festgestellt wird, dass die aktuelle Ist-Verzögerung die aktuelle Soll-Verzögerung erreicht oder übersteigt, und
- in dem Betätigungsschritt (114.7) in einem zweiten Betriebsmodus wenigstens eine zweite Bremseinheit (106) der Bremseinrichtung (107) betätigt wird, wenn in dem Vergleichsschritt (114.5) festgestellt wird, dass die aktuelle Ist-Verzögerung die aktuelle Soll-Verzögerung unterschreitet,
wobei insbesondere
- in dem ersten Betriebsmodus die zweite Bremseinheit (106), insbesondere in Abhängigkeit von der aktuellen Soll-Verzögerung, ergänzend betätigt wird und/oder.
- in dem ersten Betriebsmodus die erste Bremseinheit (105) und/oder die zweite Bremseinheit (106) über einen ersten Signalpfad (110) angesteuert wird und/oder.
- in dem zweiten Betriebsmodus die erste Bremseinheit (105) deaktiviert wird. und/oder
- in dem zweiten Betriebsmodus die zweite Bremseinheit (106) über einen zweiten Signalpfad (117) angesteuert wird, der von dem ersten Signalpfad (110) verschieden ist.

6. Verfahren nach Anspruch 5, **dadurch gekennzeichnet, dass**
- der erste Betriebsmodus ein, insbesondere durch ein Schnellbremssignal ausgelöster, Schnellbremsmodus ist,
- der zweite Betriebsmodus ein Notbremsmodus ist, und
- ein Betriebsbremsmodus vorgesehen ist, in dem bei Fehlen eines Schnellbremssignals keine Durchführung des Vergleichsschritts (114.5) erfolgt, wobei
- in dem Betriebsbremsmodus insbesondere die erste Bremseinheit (105) betätigt wird und, insbesondere in Abhängigkeit von der aktuellen Soll-Verzögerung, gegebenenfalls ergänzend die zweite Bremseinheit (106) betätigt wird.

7. Verfahren nach einem der Ansprüche 1 bis 6, **dadurch gekennzeichnet, dass**
- als eine erste Bremseinheit eine elektrodynamische Bremseinheit (105) verwendet wird
und/oder
- als eine zweite Bremseinheit eine mechanische Bremseinheit (106), insbesondere eine pneumatische Bremseinheit (106), verwendet wird.

8. Vorrichtung zur Ansteuerung einer Bremseinrichtung eines Fahrzeugs (101), insbesondere eines Schienenfahrzeugs für den Hochgeschwindigkeitsverkehr, mit einer Steuereinrichtung (108), wobei
- die Steuereinrichtung (108) dazu ausgebildet ist, in einem Ermittlungsschritt wenigstens ein für eine aktuelle Ist-Verzögerung des Fahrzeugs (101) entlang einer Fahrzeuglängsrichtung repräsentatives, von einem Betriebszustand der Bremseinrichtung (107) des Fahrzeugs (101) unabhängiges Ist-Verzögerungssignal zu ermitteln,
- die Steuereinrichtung (108) dazu ausgebildet ist, in einem Vergleichsschritt das Ist-Verzögerungssignal mit einem vorgebbaren Soll-Verzögerungssignal zu vergleichen, wobei das Soll-Verzögerungssignal für eine aktuell vorgegebene Soll-Verzögerung des Fahrzeugs (101) repräsentativ ist, und
- die Steuereinrichtung (108) dazu ausgebildet ist, in einem Betätigungsschritt in Abhängigkeit von dem Ergebnis des Vergleichsschritts wenigstens eine Bremseinheit (105, 106) der Bremseinrichtung (107) zur Unterstützung einer Bremswirkung der Bremseinrichtung (107) anzusteuern,
**dadurch gekennzeichnet, dass**
- die Steuereinrichtung (108) dazu ausgebildet ist, das Ist-Verzögerungssignal in dem Ermittlungsschritt unter Verwendung einer Mehrzahl voneinander unabhängiger Teilsignale ermittelt wird, wobei
- jedes Teilsignal für die aktuelle Ist-Verzögerung des Fahrzeugs (101) entlang der Fahrzeuglängsrichtung repräsentativ ist.

9. Vorrichtung nach Anspruch 8, **dadurch gekennzeichnet, dass**
- für ein erstes Teilsignal eine erste Quelle (109, 111, 112, 113) vorgesehen ist und
- für ein zweites Teilsignal eine zweite Quelle (109, 111, 112, 113) vorgesehen ist, die von der ersten Quelle (109, 111, 112, 113) verschieden ist, wobei
- die erste Quelle (109, 111, 112, 113) und die zweite Quelle (109, 111, 112, 113) insbesondere unterschiedlicher Art sind.

10. Vorrichtung nach Anspruch 8 oder 9, **dadurch gekennzeichnet, dass**
- wenigstens eine Quelle (109, 111, 112) als ein Teilsignal ein Signal liefert, welches aus einem für eine aktuelle Geschwindigkeit des Fahrzeugs (101) repräsentativen Geschwindigkeitssignal abgeleitet ist,
und/oder
- wenigstens ein Beschleunigungssensor (113) des Fahrzeugs (101) als Quelle eines der Teilsignale vorgesehen ist,
wobei
- das Geschwindigkeitssignal insbesondere aus einer, insbesondere satellitengestützten, Navigationseinheit (111) des Fahrzeugs (101) stammt,
und/oder
- das Geschwindigkeitssignal insbesondere aus einem Fahrzeugleitsystem (109) des Fahrzeugs (101) stammt
und/oder
- das Geschwindigkeitssignal insbesondere aus wenigstens einem Drehzahlsignal abgeleitet ist, das für die Drehzahl wenigstens einer Antriebskomponente des Fahrzeugs (101), insbesondere einer Radeinheit (103.1) und/oder einer Motoreinheit des Fahrzeugs (101), repräsentativ ist.

11. Vorrichtung nach einem der Ansprüche 8 bis 10, **dadurch gekennzeichnet, dass**
- die Steuereinrichtung (108) dazu ausgebildet ist, bei der Ermittlung des Ist-Verzögerungssignals eine Plausibilitätsprüfung wenigstens eines der Teilsignale durchzuführen und
- die Steuereinrichtung (108) dazu ausgebildet ist, das wenigstens eine Teilsignal in Abhängigkeit von einem Ergebnis der Plausibilitätsprüfung für die Ermittlung des Ist-Verzögerungssignals zu verwenden, wobei
- die Plausibilitätsprüfung insbesondere unter Verwendung wenigstens eines zweiten Teilsignals erfolgt
und/oder
- zur Ermittlung des Ist-Verzögerungssignals insbesondere ein Mittelwert der verwendeten Teilsignale verwendet wird.

12. Vorrichtung nach einem der Ansprüche 8 bis 11, **dadurch gekennzeichnet, dass**
- die Steuereinrichtung (108) dazu ausgebildet ist, in dem Betätigungsschritt in einem ersten Betriebsmodus wenigstens eine erste Bremseinheit (105) der Bremseinrichtung (107) zu betätigen, wenn in dem Vergleichsschritt festgestellt wird, dass die aktuelle Ist-Verzögerung die aktuelle Soll-Verzögerung erreicht oder übersteigt, und
- die Steuereinrichtung (108) dazu ausgebildet ist, in dem Betätigungsschritt in einem zweiten Betriebsmodus wenigstens eine zweite Bremseinheit (106) der Bremseinrichtung (107) zu betätigen, wenn in dem Vergleichsschritt festgestellt wird, dass die aktuelle Ist-Verzögerung die aktuelle Soll-Verzögerung unterschreitet,
wobei insbesondere
- in dem ersten Betriebsmodus der Steuereinrichtung (108) die zweite Bremseinheit (106), insbesondere in Abhängigkeit von der aktuellen Soll-Verzögerung, ergänzend betätigt wird
und/oder.
- in dem ersten Betriebsmodus der Steuereinrichtung (108) die erste Bremseinheit (105) und/oder die zweite Bremseinheit (106) über einen ersten Signalpfad (110) angesteuert wird
und/oder.
- in dem zweiten Betriebsmodus die erste Bremseinheit (105) deaktiviert wird.
und/oder
- in dem zweiten Betriebsmodus die zweite Bremseinheit (106) über einen zweiten Signalpfad (117) angesteuert wird, der von dem ersten Signalpfad (110) verschieden ist.

13. Vorrichtung nach Anspruch 12, **dadurch gekennzeichnet, dass**
- der erste Betriebsmodus ein, insbesondere durch ein Schnellbremssignal ausgelöster, Schnellbremsmodus ist,
- der zweite Betriebsmodus ein Notbremsmodus ist, und
- ein Betriebsbremsmodus der Steuereinrichtung (108) vorgesehen ist, in dem bei Fehlen eines Schnellbremssignals keine Durchführung des Vergleichsschritts erfolgt, wobei
- in dem Betriebsbremsmodus insbesondere die erste Bremseinheit (105) betätigt wird und, insbesondere in Abhängigkeit von der aktuellen Soll-Verzögerung, gegebenenfalls ergänzend die zweite Bremseinheit (106) betätigt wird.

14. Vorrichtung nach einem der Ansprüche 8 bis 13, **dadurch gekennzeichnet, dass**
- als eine erste Bremseinheit eine elektrodynamische Bremseinheit (105) vorgesehen ist
und/oder
- als eine zweite Bremseinheit eine mechanische Bremseinheit (106), insbesondere eine pneumatische Bremseinheit (106), vorgesehen ist.

15. Fahrzeug, insbesondere Schienenfahrzeug für den Hochgeschwindigkeitsverkehr mit einer Nennbetriebsgeschwindigkeit oberhalb von 250 km/h, insbesondere oberhalb von 350 km/h, mit einer Vorrichtung nach einem der Ansprüche 8 bis 14.

## Claims

1. A method for actuating a braking device of a vehicle, in particular of a rail vehicle for high-speed traffic, in which
- in a determination step, at least one actual deceleration signal is determined, which is representative of a current actual deceleration of the vehicle (101) along the longitudinal direction of the vehicle and which is independent of a state of the braking device (107) of the vehicle (101),
- in a comparison step (114.5), said actual deceleration signal is compared with a predefined setpoint deceleration signal, wherein said setpoint deceleration signal is representative for a current predefined setpoint deceleration of the vehicle (101), and
- in an actuating step (114.7), as a function of the result of said comparison step, at least one braking unit (105, 106) of said braking device (107) is actuated to support a braking effect of said braking device (107),
**characterized in that**,
- in said determination step, said actual deceleration signal is determined using a plurality of mutually independent partial signals, wherein
- each partial signal is representative of the actual deceleration of said vehicle (101) along said longitudinal direction of the vehicle.

2. Method according to claim 1, **characterized in that**
- at least two of said partial signals originate from different sources (109, 111, 112, 113), wherein
- said different sources (109, 111, 112, 113), in particular, are of different types.

3. Method according to claim 1 or 2, **characterized in that**
- a signal which is derived from a speed signal representative of a current speed of said vehicle (101) is used as one of said partial signals,
and/or
- a signal which is derived from an acceleration sensor (113) of the vehicle (101) is used as one of the partial signals,
wherein
- said speed signal, in particular, originates from a, in particular satellite-based, navigation unit (111) of the vehicle (101),
and/or
- said speed signal, in particular, originates from a vehicle control system (109) of the vehicle (101),
and/or
- said speed signal, in particular is derived from at least one rotational speed signal which is representative of the rotational speed of at least one drive component of said vehicle (101), in particular of a wheel unit (103.1) and/or of a motor unit of said vehicle (101)

4. Method according to one of claims 1 to 3, **characterized in that**
- a plausibility check of at least one of said partial signals takes place during the determination of said actual deceleration signal, and
- said at least one partial signal is used as a function of a result of said plausibility check for determining said actual deceleration signal , wherein
- said plausibility check, in particular, is performed using at least one second partial signal
and/or
- for the determination of said actual deceleration signal, in particular, an average value of said used partial signals is used.

5. Method according to one of claims 1 to 4, **characterized in that**
- in said actuating step, in a first operating mode, at least one first braking unit (105) of said braking device (107) is actuated if it is determined, in said comparison step (114.5), that said current actual deceleration reaches or exceeds said current setpoint deceleration, and,
- in said actuating step (114.7) in a second operating mode, at least one second braking unit (106) of said braking device (107) is actuated if, in said comparison step (114.5), it is determined that the current actual deceleration falls below said current setpoint deceleration,
wherein in particular
- in said first operating mode, said second braking unit (106), in particular as a function of said current deceleration, is additionally actuated
and/or
- in said first operating mode, said first braking unit (105) and/or said second braking unit (106) is actuated via a first signal path (110)
and/or
- said first braking unit (105) is deactivated in said second operating mode
and/or
- in said second operating mode, said second braking unit (106) is actuated via a second signal path (117) which is different from the first signal path (110).

6. Method according to claim 5, **characterized in that**
- said first operating mode is a rapid braking mode triggered, in particular, by a rapid braking signal,
- said second operating mode is an emergency braking mode, and
- a service braking mode is provided in which, in the absence of said rapid braking signal, no comparison step (114.5) is carried out, wherein
- in said service braking mode, in particular, said first brake unit (105) is actuated, and said second brake unit (106) is additionally actuated eventually, in particular, as a function of said current setpoint deceleration.

7. Method according to one of claims 1 to 6, **characterized in that**
- an electrodynamic braking unit (105) is used as a first braking unit,
and/or
- a mechanical braking unit (106), in particular a pneumatic braking unit (106), is used as a second braking unit.

8. A device for actuating a braking device of a vehicle (101), in particular of a rail vehicle for high-speed traffic, with an control device (108), wherein ,
- said control device (108) is configured to determine, in a determination step, at least one actual deceleration signal, which is representative for a current actual deceleration of said vehicle (101) along the longitudinal direction of the vehicle and which is independent of a state of the braking device (107) of said vehicle (101),
- said control device (108) is configured to compare, in a comparison step, said actual deceleration signal with a predefined setpoint deceleration signal, wherein said setpoint deceleration signal is representative for a current predefined setpoint deceleration of the vehicle (101), and
- said control device (108) is configured to actuate, in an actuating step, as a function of the result of said comparison step, at least one braking unit (105, 106) of said braking device (107) to support of a braking effect of said braking device (107),
**characterized in that**
- said control device (108) is configured to determine, in the determination step, said actual deceleration signal using a plurality of mutually independent partial signals, wherein
- each partial signal is representative of the actual deceleration of said vehicle (101) along said longitudinal direction of the vehicle.

9. Device according to claim 8, **characterized in that**
- a first source (109, 111, 112, 113) is provided for a first partial signal, and
- a second source (109, 111, 112, 113) is provided for a second partial signal, which is different from said first source (109, 111, 112, 113), wherein
- said first source (109, 111, 112, 113) and said second source (109, 111, 112, 113), in particular, are of different types.

10. Device according to claim 8 or 9, **characterized in that**
- at least one source (109, 111, 112) as said partial signal supplies a signal which is derived from a speed signal representative of a current speed of said vehicle (101),
and/or
- at least one acceleration sensor (113) of said vehicle (101) is provided as a source of one of said partial signals
wherein
- said speed signal, in particular, originates from a, in particular satellite-based, navigation unit (111) of the vehicle (101),
and/or
- said speed signal, in particular, originates from a vehicle control system (109) of the vehicle (101),
and/or
- said speed signal, in particular is derived from at least one rotational speed signal which is representative of the rotational speed of at least one drive component of said vehicle (101), in particular of a wheel unit (103.1) and/or of a motor unit of said vehicle (101)

11. Device according to one of claims 8 to 10, **characterized in that**
- said control device (108) is configured to carry out a plausibility check of at least one of said partial signals during the determination of said actual deceleration signal, and
- said control device (108) is configured to use the at least one partial signal as a function of a result of said plausibility check for determining said actual deceleration signal, wherein
- said plausibility check, in particular, is performed using at least one second partial signal
and/or
- for the determination of said actual deceleration signal, in particular, an average value of said used partial signals is used.

12. Device according to one of claims 8 to 11, **characterized in that**
- said control device (108) is configured to actuate, in said actuating step, in a first operating mode, at least one first braking unit (105) of said braking device (107) if it is determined, in said comparison step (114.5), that said current actual deceleration reaches or exceeds said current setpoint deceleration, and,
- said control device (108) is configured to actuate, in said actuating step (114.7) in a second operating mode, at least one second braking unit (106) of said braking device (107) is actuated if, in said comparison step (114.5), it is determined that the current actual deceleration falls below said current setpoint deceleration, wherein, in particular,
- in said first operating mode of said actuator device (108), said second braking unit (106), in particular as a function of said current deceleration, is additionally actuated
and/or
- in said first operating mode of said actuator device (108), said first braking unit (105) and/or said second braking unit (106) is actuated via a first signal path (110)
and/or
- said first braking unit (105) is deactivated in said second operating mode and/or
- in said second operating mode, said second braking unit (106) is actuated via a second signal path (117) which is different from said first signal path (110).

13. Device according to claim 12, **characterized in that**
- said first operating mode is a rapid braking mode triggered, in particular, by a rapid braking signal,
- said second operating mode is an emergency braking mode, and
- a service braking mode of said control device (108) is provided in which, in the absence of said rapid braking signal, no comparison step (114.5) is carried out, wherein
- in said service braking mode, in particular, said first brake unit (105) is actuated, and said second brake unit (106) is additionally actuated eventually, in particular, as a function of said current setpoint deceleration.

14. Device according to one of claims 8 to 13, **characterized in that**
- an electrodynamic brake unit (105) is provided as a first brake unit, and / or
- a mechanical brake unit (106), in particular a pneumatic brake unit (106), is provided as a second brake unit is.

15. Vehicle, in particular a rail vehicle for high-speed traffic with a nominal operating speed above 250 km/h, in particular above 350 km/ h, with a device according to one of claims 8 to 14.

## Revendications

1. Procédé de commande d'un dispositif de freinage d'un véhicule, en particulier un véhicule ferroviaire pour le trafic à grande vitesse, dans lequel:
- dans une étape de détermination, au moins un signal de décélération réelle est déterminé qui est représentatif d'une décélération réelle actuelle du véhicule (101) le long d'une direction longitudinale du véhicule et qui est indépendant d'un état de fonctionnement du dispositif de freinage (107) du véhicule (101),
- dans une étape de comparaison (114.5), le signal de décélération réelle est comparé à un signal de décélération cible prédéterminable, dans lequel le signal de décélération cible est représentatif pour une décélération cible actuellement prédéterminée du véhicule (101), et
- dans une étape d'actuation, en fonction du résultat de l'étape de comparaison, au moins une unité de freinage (105, 106) du dispositif de freinage (107) est actionnée pour supporter une action de freinage du dispositif de freinage (107),
**caractérisé en ce que**
- le signal de décélération réelle est déterminé, dans l'étape de détermination, en utilisant une pluralité de signaux partiels indépendants, dans lequel
- chaque signal partiel est représentatif de la décélération réelle actuelle du véhicule (101) le long de la direction longitudinale du véhicule.

2. Procédé selon la revendication 1, **caractérisé en ce que**
- au moins deux des signaux partiels viennent de sources différentes (109, 111, 112, 113), dans lequel
- les différentes sources (109, 111, 112, 113), en particulier, sont de types différents.

3. Procédé selon la revendication 1 ou 2, **caractérisé en ce que**
- on utilise comme l'un des signaux partiels un signal qui est dérivé à partir d'un signal de vitesse qui est représentatif pour une vitesse actuelle du véhicule (101),
et/ou
- on utilise comme l'un des signaux partiels un signal qui vient d'un capteur d'accélération (113) du véhicule (101),
dans lequel
- le signal de vitesse, en particulier, vient d'une, l'unité de navigation (111) du véhicule (101), en particulier à base de satellites,
et/ou
- le signal de vitesse, en particulier, vient d'un système de commande de véhicule (109) du véhicule (101),
et/ou
- le signal de vitesse, en particulier, est dérivé d'au moins un signal de vitesse de rotation qui est représentatif pour la vitesse de rotation d'au moins un composant d'entraînement du véhicule (101), en particulier d'une unité de roue (103.1) et/ou d'une unité de moteur du véhicule (101),

4. Procédé selon l'une quelconque des revendications 1 à 3, **caractérisé en ce que**
- lors de la détermination du signal de décélération réelle, un test de plausibilité est effectué en relation à au moins l'un des signaux partiels, et,
- en fonction d'un résultat du test de plausibilité, l'au moins un signal partiel est utilisé pour la détermination du signal de décélération réelle, dans lequel
- le test de plausibilité, en particulier, est réalisé en utilisant au moins un deuxième signal partiel
et/ou
- pour déterminer le signal de décélération réelle, en particulier, la moyenne des signaux partiels utilisés est utilisée.

5. Procédé selon l'une quelconque des revendications 1 à 4, **caractérisé en ce que**,
- dans l'étape d'actuation, dans un premier mode de fonctionnement, au moins une première unité de freinage (105) du dispositif de freinage (107) est actionnée lorsqu'il est déterminé, dans l'étape de comparaison (114.5), que la décélération réelle actuelle atteint ou est supérieure à la décélération cible actuelle, et
- dans l'étape d'actuation (114.7), dans un deuxième mode de fonctionnement, au moins une deuxième unité de freinage (106) du dispositif de freinage (107) est actionnée lorsqu'il est déterminé, dans l'étape de comparaison (114.5), que la décélération réelle actuelle est inférieure à la décélération cible actuelle, dans lequel, en particulier,
- dans le premier mode de fonctionnement, la deuxième unité de frein (106) est actionnée en support, en particulier, en fonction de la décélération cible actuelle courant,
et/ou
- dans le premier mode de fonctionnement, la première unité de frein (105) et/ou la deuxième unité de frein (106) est commandée par l'intermédiaire d'un premier trajet de signal (110),
et/ou
- dans le deuxième mode de fonctionnement, la première unité de frein (105) est désactivée
et/ou
- dans le deuxième mode de fonctionnement, la deuxième unité de frein (106) est commandée par l'intermédiaire d'un deuxième trajet de signal (117) qui est différent au premier trajet de signal (110).

6. Procédé selon la revendication 5, **caractérisé en ce que**
- le premier mode de fonctionnement est un mode de freinage rapide déclenché, en particulier, par un signal de freinage rapide,
- le deuxième mode de fonctionnement est un mode de freinage d'urgence, et
- un mode de freinage de service est prévu, dans lequel, en l'absence d'un signal de freinage rapide, il n'y a aucune réalisation de l'étape de comparaison (114.5), dans lequel,
- dans le mode de freinage de service, en particulier, la première unité de freinage (105) est actionnée, et, en particulier en fonction de la décélération cible actuelle, le cas échéant en outre la deuxième unité de freinage (106) est actionnée.

7. Procédé selon l'une quelconque des revendications 1 à 6, **caractérisé en ce que**
- en tant que première unité de freinage, une unité de freinage électrodynamique (105) est utilisée,
et/ou
- en tant que deuxième unité de freinage, une unité de freinage mécanique (106), en particulier une unité de freinage pneumatique (106), est utilisée.

8. Dispositif de commande d'un dispositif de freinage d'un véhicule (101), en particulier un véhicule ferroviaire pour le trafic à grande vitesse, comportant un dispositif de commande (108), dans lequel
- le dispositif de commande (108) est adapté pour déterminer, dans une étape de détermination, au moins un signal de décélération réelle qui est représentatif d'une décélération réelle actuelle du véhicule (101) le long d'une direction longitudinale du véhicule et qui est indépendant d'un état de fonctionnement du dispositif de freinage (107) du véhicule (101), ,
- le dispositif de commande (108) est adapté pour comparer, dans une étape de comparaison (114.5), le signal de décélération réelle à un signal de décélération cible prédéterminable, dans lequel le signal de décélération cible est représentatif pour une décélération cible actuellement prédéterminée du véhicule (101), et
- le dispositif de commande (108) est adapté pour actionner, dans une étape d'actuation, en fonction du résultat de l'étape de comparaison, au moins une unité de freinage (105, 106) du dispositif de freinage (107) pour supporter une action de freinage du dispositif de freinage (107),
**caractérisé en ce que**
- le dispositif de commande (108) est adapté pour déterminer, dans l'étape de détermination, le signal de décélération réelle en utilisant une pluralité de signaux partiels indépendants, dans lequel
- chaque signal partiel est représentatif de la décélération réelle actuelle du véhicule (101) le long de la direction longitudinale du véhicule.

9. Dispositif selon la revendication 8, **caractérisé en ce que**
- pour d'un premier signal partiel, une première source (109, 111, 112, 113) est prévue, et
- pour un deuxième signal partiel, une deuxième source (109, 111, 112, 113) est prévue qui est différente de la première source (109, 111, 112, 113), dans lequel
- la première source (109, 111, 112, 113) et la deuxième source (109, 111, 112, 113), en particulier sont de types différents.

10. Dispositif selon la revendication 8 ou 9, **caractérisé en ce que**
- au moins une source (109, 111, 112) fournit comme signal partiel un signal qui est dérivé à partir d'un signal de vitesse qui est représentatif pour une vitesse actuelle du véhicule (101),
et/ou
- au moins un capteur d'accélération (113) du véhicule (101) est prévu en tant que source de l'un des signaux partiels un signal,
dans lequel
- le signal de vitesse, en particulier, vient d'une, l'unité de navigation (111) du véhicule (101), en particulier à base de satellites,
et/ou
- le signal de vitesse, en particulier, vient d'un système de commande de véhicule (109) du véhicule (101),
et/ou
- le signal de vitesse, en particulier, est dérivé d'au moins un signal de vitesse de rotation qui est représentatif pour la vitesse de rotation d'au moins un composant d'entraînement du véhicule (101), en particulier d'une unité de roue (103.1) et/ou d'une unité de moteur du véhicule (101),

11. Dispositif selon l'une des revendications 8 à 10, **caractérisé en ce que**
- le dispositif de commande (108) est adapté pour effectuer un test de plausibilité est effectué en relation à au moins l'un des signaux partiels, et
- le dispositif de commande (108) est adapté pour utiliser, en fonction d'un résultat du test de plausibilité, l'au moins un signal partiel pour la détermination du signal de décélération réelle, dans lequel
- le test de plausibilité, en particulier, est réalisé en utilisant au moins un deuxième signal partiel
et/ou
- pour déterminer le signal de décélération réelle, en particulier, la moyenne des signaux partiels utilisés est utilisée.

12. Dispositif selon l'une des revendications 8 à 11, **caractérisé en ce que**
- le dispositif de commande (108) est adapté pour actionner, dans l'étape d'actuation, dans un premier mode de fonctionnement, au moins une première unité de freinage (105) du dispositif de freinage (107) lorsqu'il est déterminé, dans l'étape de comparaison (114.5), que la décélération réelle actuelle atteint ou est supérieure à la décélération cible actuelle, et
- le dispositif de commande (108) est adapté pour actionner, dans l'étape d'actuation (114.7), dans un deuxième mode de fonctionnement, au moins une deuxième unité de freinage (106) du dispositif de freinage (107) lorsqu'il est déterminé, dans l'étape de comparaison (114.5), que la décélération réelle actuelle est inférieure à la décélération cible actuelle
dans lequel, en particulier,
- dans le premier mode de fonctionnement, la deuxième unité de frein (106) est actionnée en support, en particulier, en fonction de la décélération cible actuelle courant,
et/ou
- dans le premier mode de fonctionnement, la première unité de frein (105) et/ou la deuxième unité de frein (106) est commandée par l'intermédiaire d'un premier trajet de signal (110),
et/ou
- dans le deuxième mode de fonctionnement, la première unité de frein (105) est désactivée
et/ou
- dans le deuxième mode de fonctionnement, la deuxième unité de frein (106) est commandée par l'intermédiaire d'un deuxième trajet de signal (117) qui est différent au premier trajet de signal (110).

13. Dispositif selon la revendication 12, **caractérisé en ce que**
- le premier mode de fonctionnement est un mode de freinage rapide déclenché, en particulier, par un signal de freinage rapide,
- le deuxième mode de fonctionnement est un mode de freinage d'urgence, et
- un mode de freinage de service du dispositif de commande (108) est prévu, dans lequel, en l'absence d'un signal de freinage rapide, il n'y a aucune réalisation de l'étape de comparaison (114.5), dans lequel,
- dans le mode de freinage de service, en particulier, la première unité de freinage (105) est actionnée, et, en particulier en fonction de la décélération cible actuelle, le cas échéant en outre la deuxième unité de freinage (106) est actionnée.

14. Dispositif selon l'une quelconque des revendications 8 à 13, **caractérisé en ce que**
- en tant que première unité de freinage, une unité de freinage électrodynamique (105) est prévue,
et/ou
- en tant que deuxième unité de freinage, une unité de freinage mécanique (106), en particulier une unité de freinage pneumatique (106), est prévue.

15. Véhicule, en particulier véhicule ferroviaire pour le trafic à grande vitesse avec une vitesse de fonctionnement nominal supérieure à 250 km/h, en particulier supérieure à 350 km/h, comprenant un dispositif selon l'une quelconque des revendications 8 à 14
